Europäisches Patentamt

**European Patent Office**

Office européen des brevets

(19)

(11) Publication number: **0 297 140**
A1

(12)

# EUROPEAN PATENT APPLICATION

published in accordance with Art. 158(3) EPC

(21) Application number: **87906760.1**

(22) Date of filing: **14.10.87**

Data of the international application taken as a basis:

(86) International application number:
**PCT/JP87/00768**

(87) International publication number:
**WO88/05066 (14.07.88 88/15)**

(51) Int. Cl.³: **C 09 G 1/14**
**C 09 D 5/00**

(30) Priority: **26.12.86 JP 312403/86**
**03.04.87 JP 82456/87**
**06.07.87 JP 166967/87**

(43) Date of publication of application:
**04.01.89 Bulletin 89/1**

(84) Designated Contracting States:
**DE FR GB IT**

(71) Applicant: **NIPPON SODA CO., LTD.**
**2-1, Ohtemachi 2-chome**
**Chiyoda-ku Tokyo, 100(JP)**

(71) Applicant: **WILLSON CO., LTD.**
**6-13 Saginomiya 1-chome Nakano-ku**
**Tokyo 165(JP)**

(72) Inventor: **SATO, Masayuki**
**12-13, Daita 2-chome Setagaya-ku**
**Tokyo 155(JP)**

(72) Inventor: **MORI, Atsushi**
**201-181 Wakamatsucho Chiba-shi**
**Chiba 280(JP)**

(72) Inventor: **AIZAWA, Mamoru**
**2-4, Yushudaihigashi Ichihara-shi**
**Chiba 299-01(JP)**

(72) Inventor: **YAMAGUCHI, Masayuki**
**1344-10, Sasai Sayama-shi**
**Saitama 350-13(JP)**

(74) Representative: **Baarslag, Aldert D. et al,**
**Nederlandsch Octrooibureau Johan de Wittlaan 15 P.O.**
**Box 29720**
**NL-2502 LS Den Haag(NL)**

(54) **AGENT FOR TREATING COATED SURFACE.**

(57) An agent for treating a coated surface, which contains at least one member selected from the group consisting of metal alkoxides represented by general formula: $M(OR)_n$, (wherein M represents at least one metal atom selected from the group consisting of metal atoms of the groups IIIb, IV, and Va of the periodic table, R represents at least one member selected from the group consisting of straight-chain or branched and saturated or unsaturated aliphatic hydrocarbyl groups containing 1 to 22 carbon atoms), their homopolymers (average degree of condensation: 2 to 10), and their copolymers (average degree of condensation: 2 to 10). This agent is useful as polishing agent with stain-preventing properties to be applied on the surface of vehicles, aircraft, office furniture, etc.

1

SPECIFICATION

A TREATING AGENT FOR A COATED SURFACE

Technical Field

This invention relates to a treating agent for a coated surface. More particularly, it relates to a treating agent for a coated surface which comprises a specific metal alkoxide or a polymer thereof as a main ingredient.

The treating agent for a coated surface of the present invention is useful as a stainproof polishing agent for coated surfaces of, for example, vehicles, aircrafts and office furnitures.

Background Art

There have been widely marketed polishing waxes for a coated surface, for example, a car wax.

Although the detailed composition of each polishing wax is not disclosed by the manufacturer, typical ingredients thereof include a wax which forms a glossy film, silicone oil which fluidizes said wax and makes said film water repellent, an organic solvent or water which is employed as a dispersion medium as well as various additives such as a surfactant and an abrasive material [cf. Encyclopedia of Chemical Technology, 3rd. ed., vol. 18, 324 - 325, Kirk-Othmer; Senjo Sekkei, spring (25), 63-80 (1980); and Bosei Kanri, Jun., 9 - 14 (1985)].

Disclosure of the Invention

As described above, a conventional treating agent for a coated surface aims at improving the gloss of the surface, imparting a water repellency thereto and protecting thereof through the adhesion of a wax and silicone oil to the coated surface. Thus the efficiency of the treating agent depends on the physical properties of the film formed on the coated surface. The strength of said film depends on, in particular, the properties and content of the wax. Generally speaking, a film of a high strength is liable to be stained and the resulting stains can be hardly removed by washing with water. It is further believed that a high film strength would make waxing troublesome thus lowering the workability (cf. the literature cited above).

In addition, since such a wax as described above contains no ingredient having an organic group which is chemically bound to a coated surface, the binding force between the coated surface and the wax film is weak.

It is an object of the present invention to provide a treating agent for a coated surface, which is chemically bound to the coated surface, improves the gloss thereof, is hardly stained and can be readily cleaned.

As a result of our studies in order to achieve the above object, we have found that an alkoxide derivative of a specific metal atom would exert an excellent surface treatment effect, thus completing the present invention.

Accordingly, the present invention provides a treating agent for a coated surface which comprises at least one material selected from among a metal alkoxide of the following general formula:

$$M(OR)_n$$

wherein M represents at least one metal atom selected from among those belonging to the groups IIIb, IV and Va in the periodic table;

R represents at least one straight-chain or branched and saturated or unsaturated aliphatic hydrocarbon group having 1 to 22 carbon atoms; and

n is a number corresponding to the valence of said metal atom M;

homopolymers and copolymers thereof.

The metal atom M in the above general formula is selected from among those belonging to the groups IIIb, IV and Va, preferably Si, Ti, Zr, Al, Ga, In, Nb and Ta, still preferably Si, Zr and Ti. One of these metal atoms may be used alone. Alternately a mixture thereof may be employed.

The R group in the formula $M(OR)_n$ or its polymer represents a straight- chain or branched and saturated or unsaturated hydrocarbon group having 1 to 22 carbon atoms such as methyl, ethyl, propyl, isopropyl, n-butyl, isobutyl, n-octyl, 2-ethylhexyl, dodecyl, oleyl, n-stearyl and isostearyl groups. At least one of these groups is to be used.

When M is a Zr or Ti atom, it is particularly preferable that 10 to 100 % by number of the substituent OR in the metal alkoxide or its polymer is an $OR_1$ group (wherein $R_1$ represents a straight-chain or branched and saturated or unsaturated aliphatic hydrocarbon group having 4 to 22 carbon atoms) and 90 to 0 % by number of the same is an $OR_2$ group (wherein $R_2$ represents a straight-chain or branched and saturated hydrocarbon group having one to four carbon atoms).

On the other hand, when M represents a metal atom other than Zr or Ti, a metal alkoxide of the formula $M(OR)_n$ wherein the R group of the substituent OR represents a straight-chain or branched alkyl group having one to ten carbon atoms and/or polymer(s) thereof are preferable.

Examples of the homopolymer or copolymer of $M(OR)_n$ include those having an average degree of condensation of 2 to 10 such as homopolymers of, for example, titanoxane, zirconoxane and siloxane and copolymers having a skeleton including plural types of metal atoms such as -Zr-O-Ti-, -Zr-O-Si- and -Zr-O-Si-O-Ti-. One of these polymers may be used alone. Alternately a mixture thereof may be employed.

Furthermore a mixture of the metal alkoxide of the formula $M(OR)_n$ and a polymer thereof may be employed.

Examples of the metal alkoxide of $M(OR)_n$ and/or polymers thereof included in the present invention are as follows.

(1) $M(OR)_n$:

Al$(OR)_3$, Ga$(OR)_3$, In $(OR)_3$, Ti$(OR)_4$, Si$(OR)_4$, Zr$(OR)_4$, Ta$(OR)_5$, Nb$(OR)_5$ etc.

(2) $M(OR)_n$ mixture:

Ti$(OR)_4$ + Si$(OR)_4$, Ti$(OR)_4$ + Zr$(OR)_4$, Zr$(OR)_4$ + Si$(OR)_4$, Si$(OR)_4$ + Al$(OR)_3$, Si$(OR)_4$ + Ta$(OR)_5$, Si$(OR)_4$ + Nb$(OR)_5$, Zr$(OR)_4$ + Si$(OR)_4$ + Ti$(OR)_4$ etc.

(3) $M(OR)_n$ polymer:

titanoxane, zirconoxane, siloxane, a copolymer having a skeleton of Ti-O-Si, a copolymer having a skeleton of Ti-O-Zr, a copolymer having a skeleton of Si-O-Zr, a copolymer having a skeleton of Ti-O-Zr-O-Si etc.

(4) $M(OR)_n$ polymer mixture:

titanoxane + siloxane, zirconoxane + siloxane, siloxane + zirconoxane + a copolymer having a skeleton of Si-O-Zr, siloxane + zirconoxane + titanoxane + a copolymer having a skeleton of Ti-O-Si-O-Zr or Ti-O-Zr-O-Si etc.

(5) Mixture of $M(OR)_n$ and its polymer:

Ti$(OR)_4$ + titanoxane, Si$(OR)_4$ + Zr$(OR)_4$ + siloxane + zirconoxane + a copolymer having a skeleton of Si-O-Zr, Si$(OR)_4$ + Zr$(OR)_4$ + Ti$(OR)_4$ + a copolymer having a skeleton of Ti-O-Zr-O-Si or Ti-O-Si-O-Zr etc.

It is particularly preferable that the treating agent for a coated surface of the present invention comprises, among these materials, at least two materials selected from among $Zr(OR)_4$, $Ti(OR)_4$ and $Si(OR)_4$ and/or at least one material selected from among homopolymers and copolymers thereof. The composition ratio of these ingredients may be appropriately selected depending on the purpose, without any restriction.

When $Ti(OR)_4$ and/or polymer(s) thereof are to be used, aliphatic amine(s) may be further added.

An $M(OR)_n$ polymer available in the present invention can be prepared by hydrolyzing and condensing the metal alkoxide $M(OR)_n$ to give an average degree of condensation of 2 to 10. When an $Si(OR)_4$ homopolymer, i.e., siloxane is to be prepared, it is required to add a catalyst selected from among acids such as hydrochloric, sulfuric, acetic and formic acids and alkalis such as sodium hydroxide and aqueous ammonia. However, when the hydrolysis and condensation of said $Si(OR)_4$ is carried out in the presence of $Ti(OR)_4$ or $Zr(OR)_4$, no such acid or alkali catalysts as described above are required. Further $Ti(OR)_4$ or $Zr(OR)_4$ may be readily hydrolyzed and condensed in the presence of water without requiring any acid or alkali catalysts.

A metal alkoxide of the formula $M(OR)_n$ or a polymer thereof having two or more types of substituents may be readily prepared by mixing a metal alkoxide $M(OR)_n$ having a single type of substituent or a polymer thereof with an alcohol having more carbon atoms than those of an alcohol corresponding to said substituent. Thus the treating agent for a coated surface of the present invnetion includes a system wherein one or more mol of an alcohol is added per mol of the metal atom of a metal alkoxide $M(OR)_n$ and/or a polymer thereof.

The abovementioned metal alkoxide $M(OR)_n$ and/or a polymer thereof is employed in the form of a solution obtained by dissolving the same in a solvent to give a concentration of 0.05 to 10 % by weight, preferably 0.5 to 6 % by weight. When plural types of metal alkoxides and/or polymers thereof are to be mixed together, it is required to adjust the total concentration thereof to 0.05 to 10 % by weight, preferably 0.5 to 6 % by weight.

The solvent may be appropriately selected depending on the polymer which is used as a vehicle in the coating material. Common examples of the solvent include alcohol solvents, aliphatic hydrocarbon solvents, aromatic hydrocarbon solvents, ester solvents, ketone solvents, silicone solvents such as silicone oil and mixtures thereof.

In the case of a treating agent for a coated surface which comprises at least two metal alkoxides selected from among $Zr(OR)_4$, $Ti(OR)_4$ and $Si(OR)_4$ and/or at least one material selected from among homopolymers and copolymers thereof, it is preferable to employ a solvent mixture of alcohol solvent(s) having 1 to 20 carbon atoms with silicone oil or hydrocarbon solvent(s). In this case, the treating agent for a coated surface may preferably comprise approximately 0.05 to 10 % by weight of metal alkoxides including polymer(s), approximately 0.5 to 10 % by weight of alcohol solvent(s) and approximately 80 to 99 % by weight of silicone oil or hydrocarbon solvent(s) as well as a small amount of the desired additives.

When the abovementioned tetraalkoxytitanium or a polymer thereof is to be used in the present invention, the surface treating effect of the product can be further enhanced by adding aliphatic amine(s) thereto. As the aliphatic amines, those soluble in oils are preferable and secondary amines such as diisopropylamine, dibutylamine, diamylamine and di-2-ethylhexylamine are still preferable.

The aliphatic amine(s) may be added to the treating agent for a coated surface at a ratio of 1 to 3 mol, preferably 1.5 to 2.5 mol per atom of the titanium in the treating agent for a coated surface.

The treating agent for a coated surface of the present invention may further contain perfumes, chelating agents capable of forming chelate rings together with the Zr or Ti atom, for example, phosphites, if desired.

When applied on a coated surface to give an approximately uniform thickness, the treating agent for a coated surface of the present invention can form a film which is chemically bound to the coated surface, hardly stained and readily cleaned by simply washing with water.

The treating agent for a coated surface may be applied on a coated surface by any convenient methods without restriciton. For example, it may be infiltrated into a piece of cloth and then a coated surface is wiped therewith, similar to waxing. Alternately it may be sprayed on a coated surface.

The treating agent for a coated surface of the present invention may be applied on any coated surface without restriction. For example, it may be applied on a baked metallic surface, a repaired part thereof, a coated plastics surface and a coated wooden surface by appropriately selecting a solvent depending on the polymer which serves as a vehicle in each coating material.

Best Mode for Carrying Out the Invention

To further illustrate the present invention, the following examples and compartive examples will be given.

However these examples are intended to illustrate the present invention and are not to be construed to limit the scope thereof.

I. Tetraalkoxyzirconium or polymer thereof

(1) Preparation of treating agent for coated surface

(a) Sample Z-1

Tetrakis-2-ethylhexoxyzirconium $Zr(OC_8H_{17})_4$, which will be abbreviated as TOZ hereinafter, was dissolved in a hydrocarbon solvent (Exxsol D100-140: mfd. by Exxon Chemical Co., Ltd.) to give a solution of a concentration of 3 % by weight (Z-1).

(b) Sample Z-2

To 400 g of a 88 % by weight solution of tetra-n-butoxyzirconium $Zr(OC_4H_9)_4$, which will be abbreviated as TBZ hereinafter, in n-butanol containing 0.919 mol of TBZ, 50 g (0.387 mol) of 2-ethylhexanol was added and the mixture was stirred for two hours.

The analysis of the reaction mixture thus obtained indicated that no free 2-ethylhexanol was present therein, which indicated that the mixture contained tetraalkoxyzirconium wherein 10.5 % in average of the butoxy groups of the TBZ were substituted by 2-ethylhexoxy groups.

50 g of the reaction mixture thus obtained was dissolved in 1,000 g of the same hydrocarbon solvent as the one used in the preparation of the sample Z-1 to give another sample Z-2.

(c) Sample Z-3

140 g (0.493 mol) of isostearyl alcohol was added to 440 g of the mixture of TBZ and n-butanol containing 1.149 mol of TBZ as obtained during the process for the preparation of the sample Z-2 and thoroughly mixed.

The analysis of the reaction mixture thus obtained indicated that it contained tetraalkoxyzirconium wherein 10.7 % in average of the butoxy groups of the TBZ were substituted by isostearoxy groups.

60 g of the reaction mixture thus obtained was dissolved in a solvent mixture comprising 200 g of n-hexane, 100 g of 2-propanol and 700 g of n-heptane to give a sample Z-3.

(d) Sample Z-4

A solution obtained by dissolving 15.0 g of water in 100 g of 2-propanol was added dropwise to 500 g of the reaction mixture of TBZ and n-butanol which was obtained during the process for the preparation of the sample Z-2 under stirring for four hours. The reaction mixture thus obtained was analyzed by liquid chromatography and consequently a peak corresponding to a molecular weight of approximately 800 was observed, which suggested that it was a trimer or tetramer of zirconoxane butoxide.

·100 g (corresponding to 0.135 mol as zirconoxane butoxide trimer) of this reaction mixture was mixed with 20 g (0.154 mol) of 2-ethylhexanol to give a solution containing an alkoxyzirconium polymer wherein 14.3 % of the butoxy group of the zirconoxane butoxide was substituted by the 2-ethylhexoxy group. 55 g of this solution was dissolved in 1,000 g of the same hydrocarbon solvent as the one used in the preparation of the sample Z-1 to thereby give a sample Z-4.

(2) Treatment and evaluation of coated surface

(a) Treatment of coated surface

White and black automotive iron plates (300 mm x 450 mm) coated with an acrylmelamine resin according to JIS K - 5 4 0 0 were injured by abrading with a paste compound (fine grade: mfd. by Wilson Co.) to thereby adjust a glossiness of 40 to 50, similar to those of used automobiles.

Each sample as described above was applied on these coated plates, dried at 25°C for 24 hours and wiped with cloth.

(b) Staining test

A staining agent prepared by dispersing acetylene black (XC-550-0.1 %: mfd. by Denki Kagaku Kogyo K.K.) in the same hydrocarbon solvent as used in the above paragraph (1) was sprayed on each surface-coated plate as described above. Then the plate was allowed to stand at 70°C for 30 minutes and then wiped. This procedure was repeated thrice.

For comparison, the above procedure was followed with the use of a conventional wax.

The glossinesses of the plates were measured with a 20 gloss meter (mfd. by Murakami Shikisai Kenkysho) before and after the staining.

Table 1 shows the results.

(c) Determination of contact angle of water droplet

Water was added dropwise from a pipette onto each surface-treated plate as described in (a) and the contact angle was determined with a contact angle meter (CA-D: mfd. by Kyowa Co., Ltd.).

Table 1 shows the results.

Table 1

| No. | Sample No. | Appearance | Glossiness | | | | Contact angle of water droplet(° |
| | | | White plate | | Black plate | | |
| | | | before staining | after staining | before staining | after staining | |
| Ex. 1-1 | Z-1 | transparent film | 72 | 74 | 76 | 73 | 62 |
| 1-2 | Z-2 | do. | 71 | 69 | 75 | 72 | 61 |
| 1-3 | Z-3 | do. | 69 | 67 | 74 | 73 | 62 |
| 1-4 | Z-4 | do. | 72 | 71 | 77 | 73 | 60 |
| C. Ex. 1-1 | conventional one | do. | 57 | 51 | 62 | 48 | 85 |
| 1-2 | blank | - | 40 | 40 | 42 | 42 | 45 |

(3) Practical test

Four white-coated automobiles (mfd. by Nissan Motor Co., Ltd.) were prepared. Among these automobiles, three ones were coated with the samples Z-1 and Z-3, which were prepared in the above paragraph (1), and a conventional wax respectively in the same manner as the one described in (2) and subjected to a traveling test for 88 days during which 25 days were rainy.

The glossiness of the automobiles were measured with the same device as the one used in the above paragraph (2) before and after the traveling test as well as after wiping stains thereon with cloth.

Table 2 shows the results.

Table 2

| No. | Sample No. | Before traveling | After traveling | After removing stains |
|---|---|---|---|---|
| Ex. 2-1 | Z-1 | 82 | 77 | 80 |
| 2-2 | Z-3 | 83 | 79 | 81 |
| C.Ex. 2-1 | conventional one | 72 | 58 | 62 |
| 2-2 | blank | 64 | 59 | 62 |

II. Tetraalkoxytitanium or polymer thereof

(1) Preparation of treating agent for coated surface

(a) Sample T-1

Tetrakis-2-ethylhexoxytitanium (TOT: mfd. by Nippon Soda Co., Ltd.) was dissolved in a hydrocarbon solvent (Exxsol D100-140: mfd. by Exxon Chemical Co., Ltd.) to give a 3 % by weight solution'(T-1).

(b) Sample T-2

Tetrabutoxytitanium (B-1: mfd. by Nippon Soda Co., Ltd.) was dissolved in the same hydrocarbon solvent as the one used in the preparation of the sample T-1 to give a 3 % by weight solution (T-2).

(c) Sample T-3

To 284 g (1 mol) of tetraisopropoxytitanium (A-1: mfd. by Nippon Soda Co., Ltd.), 260 g (2 mol) of 2-ethylhexanol was slowly added to give a homogeneous solution.

The analysis of the solution thus obtained indicated that it was a solution of diisopropoxy di-2-ethylhexoxy-titanium containing isopropanol which was a side product.

40 g of this solution was dissolved in 1,000 g of the same hydrocarbon solvent as the one used in the preparation of the sample T-1 to give a sample T-3.

(d) Sample T-4

To 284 g (1 mol) of the same tetrakis-2-ethylhexoxy-titanium (see the above) as the one used in the preparation of the sample T-2, 482 g (2 mol) of di(2-ethylhexyl)amine was added. This reaction was slightly exothermic and a homogeneous solution was obtained.

The analysis of this solution indicated that it was a di(2-ethylhexyl)amine complex of tetrakis-2-ethylhexoxy-titanium.

This solution was dissolved in the same hydrocarbon solution as the one used in the preparation of the sample T-1 to give a 3 % by weight solution (T-4).

(e) Sample T-5

To 284 g (1 mol) of the same tetraisopropoxytitanium as the one used above, 80 g (1 mol) of n-butanol was slowly added to give a homogeneous solution.

The analysis of this solution indicated that it was a solution of triisopropoxymonobutoxytitanium containing isopropanol which was a side product.

This solution was dissolved in the same hydrocarbon solvent as the one used in the preparation of the sample T-1 to give a 5 % by weight solution (T-5).

(f) Sample T-6

To 426 g (2 mol of Ti atom, 5.2 mol of substitutable isopropoxy group) of an isopropoxytitanium polymer (A-10: mfd. by Nippon Soda Co., Ltd.), which contained 37.5 % of titanium on the basis of titanium dioxide and wherein 73.5 % of alcohols evolved at the complete hydrolysis was isopropanol (isopropoxy number per atom of titanium: 2.63), 325 g (2.5 mol) of 2-ethylhexanol was added to give a homogeneous solution.

After distilling off isopropanol, which was a side product, the solution was analyzed. As a result, it was found that the numbers of 2-ethylhexoxy and isopropoxy per atom of titanium were 1.2 mol and 1.3 mol respectively.

35 g of the above reaction mixture was dissolved in 1,000 g of the same hydrocarbon solvent as the one described above to give a sample T-6.

(g) Sample T-7

35 g of a butoxytitanium polymer (B-10: mfd. by Nippon Soda Co., Ltd.), which contained 31.2 % of titanium on the basis of titanium dioxide and wherein all of the alcohol evolved at the complete hydrolysis was n-butanol, was dissolved in 1,000 g of the same hydrocarbon solvent as the one described above to give a sample (T-7).

(2) Treatment and evaluation of coated surface

(a) Treatment of coated surface

White and black automotive iron plates (300 mm x 450 mm) coated with an acrylmelamine resin according to JIS K - 5 4 0 0 were injured by abrading with a paste compound (fine grade: mfd. by Wilson Co.) to thereby adjust a glossiness of 40 to 50, similar to those of used automobiles.

Each sample as described above was applied on these coated plates, dried at 25°C for 24 hours and wiped with cloth.

.(b) Staining test

A staining agent prepared by dispersing acetylene black (XC-550-0.1 %: mfd. by Denki Kagaku Kogyo K.K.) in the same hydrocarbon solvent as used in the above paragraph (1) was sprayed on each surface-coated plate as described above. Then the plate was allowed to stand at 70°C for 30 minutes and then wiped. This procedure was repeated thrice.

For comparison, the above procedure was followed with the use of a conventional wax.

The glossinesses of the plates were measured with a 20 gloss meter (mfd. by Murakami Shikisai Kenkysho) before and after the staining.

Table 3 shows the results.

(c) Determination of contact angle of water droplet

Water was added dropwise from a pipette onto each surface-treated plate as described in (a) and the contact angle was determined with a contact angle meter (CA-D: mfd. by Kyowa Co., Ltd.).

Table 3 shows the results.

Table 3

| No. | Sample No. | Appearance | Glossiness | | | | Contact angle of water droplet(°) |
| | | | White plate | | Black plate | | |
| | | | before staining | after staining | before staining | after staining | |
| Ex. 1-1 | T-1 | transparent film | 74 | 74 | 79 | 74 | 85 |
| 1-2 | T-2 | do. | 68 | 66 | 76 | 73 | 83 |
| 1-3 | T-3 | do. | 67 | 65 | 73 | 72 | 84 |
| 1-4 | T-4 | do. | 73 | 73 | 78 | 75 | 74 |
| 1-5 | T-5 | do. | 72 | 71 | 77 | 74 | 84 |
| 1-6 | T-6 | do. | 72 | 72 | 78 | 74 | 82 |
| 1-7 | T-7 | do. | 69 | 67 | 76 | 74 | 81 |
| C.Ex. 1-1 | conventional one | do. | 57 | 51 | 62 | 48 | 85 |
| 1-2 | blank | - | 40 | 40 | 42 | 42 | 45 |

(3) Practical test

Four white-coated automobiles (mfd. by Nissan Motor Co., Ltd.) were prepared. Among these automobiles, three ones were coated with the samples T-1 and T-4, which were prepared in the above paragraph (1), and a conventional wax respectively in the same manner as the one described in (2) and subjected to a traveling test for 88 days during which 25 days were rainy.

The glossiness of the automobiles were measured with the same device as the one used in the above paragraph (2) before and after the traveling test as well as after wiping stains thereon with cloth.

Table 4 shows the results.

0297140

Table 4

| No. | Sample No. | Before traveling | After traveling | After removing stains |
|---|---|---|---|---|
| Ex. 2-1 | T-1 | 83 | 78 | 83 |
| 2-2 | T-3 | 82 | 80 | 82 |
| C.Ex. 2-1 | conventional one | 72 | 58 | 62 |
| 2-2 | blank | 64 | 59 | 62 |

III. Mixture system or alkoxide of Al, Ta or Nb

(1) Preparation of treating agent for coated surface

(a) Sample A-1

1.5 part by weight of tetraethoxysilane and 1.5 part by weight of tetrakis(2-ethylhexoxy)titanium were dissolved in a hydrocarbon solvent (Exxsol D 100-140: mfd. by Exxon Chemical Co., Ltd.) to give a 3 % by weight solution of said metal alkoxides (A-1).

(2) Sample A-2

Two parts by weight of tetrakis(2-ethylhexoxy)silane and one part by weight of tetra(n-decanoxy)titanium were dissolved in the same solvent as the one used in the preparation of the sample A-1 to give a 3 % by weight solution (A-2).

(c) Sample (A-3)

1.5 part by weight of hexakis(2-ethylhexoxy)disiloxane and 1.0 part by weight of tetra(n-decanoxy)titanium were dissolved in a solvent mixture comprising isopropanol and n-heptane at a ratio by weight of 10 : 90 to give a 2.5 % by weight solution (A-3).

(d) Sample A-4

Two parts by weight of a ethyl silicate condensate (Ethyl silicate 40: mfd. by Tama Chemical Co., Ltd.) and 1.0 part by weight of tetrahexoxytitanium were dissolved in the same solvent as the one used in the preparation of the sample A-1 to give a 3 % by weight solution (A-4).

(e) Sample A-5

Three parts by weight of tetraethoxysilane and 1.5 part by weight of pentatitanoxane butoxide were dissolved in the same solvent mixture as the one used in the preparation of the sample A-3 to give a 4.5 % by weight solution (A-5).

(f) Sample A-6

The procedure for the preparation of the sample A-5 was followed except that 1.5 part by weight of the pentatitanoxane butoxide was replaced with 1.5 part by weight of pentatitanoxane-2-ethylhexoxide to give a 4.5 % by weight solution (A-6).

(g) Sample A-7

1.5 part by weight of the same ethyl silicate condensate as the one described above and 1.5 part by weight of tetra(n-butoxy)zirconium were dissolved in the same solvent as the one used in the preparation of the sample A-1 to give a 3 % by weight solution (A-7).

(h) Sample A-8

1.5 parts by weight of the same ethyl silicate condensate as the one used above, 1.0 part by weight of tetra(n-butoxy)zirconium and 0.5 part by weight of tetrakis-(2-ethylhexoxy)titanium were dissolved in the same solvent as the one used in the preparation of the sample A-1 to give a 3 % by weight solution (A-8).

(i) Sample A-9

1.5 part by weight of the same ethyl silicate condensate as the one described above and 1.5 part by weight of triisopropoxyaluminum were dissolved in the same solvent as the one used in the preparation of the sample A-1 to give a 3 % by weight solution (A-9).

(j) Sample A-10

Two parts by weight of tetraethoxysilane and one part by weight of pentaisopropoxytantalum were dissolved in the same solvent as the one used in the preparation of the sample A-1 to give a 3 % by weight solution (A-10).

(k) Sample A-11

Two parts by weight of tetraethoxysilane and one part by weight of pentaethoxyniobium were dissolved in the same solvent as the one used in the preparation of the sample A-1 to give a 3 % by weight solution (A-11).

(l) Sample A-12

Five parts of tetraethoxysilane, 0.7 part of water and 0.6 part of isopropanol were mixed together. Then a mixture comprising two parts of tetrabutoxyzirconium and 0.3 part of tridecanol was added thereto. Further a mixture comprising 25 parts of silicone oil (KF 96L: mfd. by The Shin-Etsu Chemical Co., Ltd.) and 75 parts of silicone oil (KF 994: mfd. by The Shin-Etsu Chemical Co., Ltd.) was added thereto to give a 7 % by weight solution (A-12).

(m) Sample A-13

Three parts of tetramethoxysilane, 0.2 part of water and 0.6 part of ethanol were mixed together. Then a mixture comprising three parts of tetra(2-ethylhexoxy)zirconium and 0.5 part of decanol was added thereto. Further a hydrocarbon solvent (Exxsol D 100-140: mfd. by Exxon Chemical Co., Ltd.) was added thereto to give a 6 % by weight solution (A-13).

(n) Sample A-14

Two parts of an ethyl silicate condensate (Ethyl silicate 40: mfd. by Tama Chemical Co., Ltd.), 0.1 part of water and 0.5 part of butanol were mixed together. Then a mixture comprising two parts of tetradecanoxyzirconium and 0.2 part of dodecanol was added thereto. Further a mixture of silicone oil (KF 96L: see the above) and 80 parts of silicone oil (KF 994: see the above) was added thereto to give a 4 % by weight solution (A-14).

(o) Sample A-15

Three parts of tetraethoxysilane, 0.2 part of water and 0.5 part of ethanol were mixed together. Then a mixture comprising two parts of tetrabutoxyzirconium, 0.5 part of tetra(ethylhexoxy)titanium and 0.5 part of tridecanol was added thereto. The mixture thus obtained was dissolved in 100 parts of a hydrocarbon solvent (Exxsol D 100-140: mfd. by Exxon Chemical Co., Ltd.) to give a 5.5 % by weight solution (A-15).

(p) Sample A-16

Three parts of tetramethoxysilane, 0.1 part of water and 0.8 part of isopropanol were mixed together. Then a mixture comprising two parts of tetra(2-ethylhexoxy)-zirconium, 0.1 part of tetra(2-ethylhexoxy)titanium and 0.5 part of tridecanol was added thereto. Further a mixture of 25 parts of silicone oil KF 96 L (see the above) and 75 parts of silicone oil KF 994 (see the above) was added thereto to give a 3 % by weight solution (A-16).

(q) Sample A-17

Two parts of the same ethyl silicate condensate as the one described above, two parts of water and 0.5 part of butanol were mixed together. Then a mixture comprising three parts of tetradecanoxyzirconium, 0.5 part of tetrahexoxytitanium and 0.5 part of decanol was added thereto. The mixture thus obtained was dissolved in a solvent mixture comprising isopropanol and n-heptane at a ratio by weight of 10 : 90 to give a 4 % by weight solution (A-17).

(r) Sample A-18

Five parts by weight of TOZ was mixed with four parts by weight of TOT. Then 1.5 part by weight of the resulting mixture was dissolved in the same solvent as the one used in the preparation of the sample A-1 to give a sample having a

**POOR QUALITY**

concentration of approximately 1.5 % by weight (A-18).

(s) Sample A-19

1.5 part by weight of tetra(n-decanoxy)zirconium and 1.5 part by weight of tetrakis(2-ethylhexoxy)titanium were dissolved in the same solvent as the one used in the preparation of the sample A-1 to give a 3 % by weight solution (A-19).

(t) Sample S-1

2.0 parts by weight of triisopropoxyaluminum were dissolved in the same solvent as the one used in the preparation of the sample A-1 to give a 2.0 % by weight solution (S-1).

(u) Sample S-2

One part by weight of pentaisopropoxytantalum was dissolved in the same solution as the one used in the preparation of the sample A-1 to give a 1 % by weight solution (S-2).

(v) Sample S-3

One part by weight of pentaethoxyniobium was dissolved in the same solvent as the one used in the preparation of the sample A-1 to give a 1 % by weight solution (S-3).

(2) Treatment and evaluation of coated surface

(a) Treatment of coated surface

White and black automotive iron plates (300 mm x 450 mm) coated with an acrylmelamine resin according to JIS K -

were injured by abrading with a paste compound (fine grade: mfd. by Wilson Co.) to thereby adjust a glossiness of 40 to 50, similar to those of used automobiles.

Each sample as described above was applied on these coated plates, dried at 25°C for 24 hours and wiped with cloth.

(b) Staining test

A staining agent prepared by dispersing acetylene black (XC-550-0.1 %: mfd. by Denki Kagaku Kogyo K.K.) in the same hydrocarbon solvent as used in the above paragraph (1) was sprayed on each surface-coated plate as described above. Then the plate was allowed to stand at 70°C for 30 minutes and then wiped. This procedure was repeated thrice.

For comparison, the above procedure was followed with the use of a conventional wax.

The glossinesses of the plates were measured with a 20 gloss meter (mfd. by Murakami Shikisai Kenkysho) before and after the staining.

Table 5 shows the results.

(c) Determination of contact angle of water droplet

Water was added dropwise from a pipette onto each surface-treated plate as described in (a) and the contact angle was determined with a contact angle meter (CA-D: mfd. by Kyowa Co., Ltd.).

Table 5 shows the results.

**POOR QUALITY**

Table 5

| No. | | Sample No. | Appearance | Glossiness | | | | Contact angle of water droplet(°) |
|-----|--|------------|------------|------------|---|---|---|-----------------------------------|
| | | | | White plate | | Black plate | | |
| | | | | before staining | after staining | before staining | after staining | |
| Ex. | 1-1 | A-1 | transparent film | 74 | 72 | 77 | 74 | 60 |
| | 1-2 | A-2 | do. | 72 | 69 | 74 | 71 | 61 |
| | 1-3 | A-3 | do. | 68 | 66 | 73 | 72 | 62 |
| | 1-4 | A-4 | do. | 73 | 71 | 76 | 73 | 60 |
| | 1-5 | A-5 | do. | 65 | 63 | 68 | 66 | 69 |
| | 1-6. | A-6 | do. | 71 | 70 | 76 | 74 | 71 |
| | 1-7 | A-7 | do. | 69 | 68 | 72 | 70 | 66 |
| | 1-8 | A-8 | do. | 75 | 73 | 78 | 74 | 68 |
| | 1-9 | A-9 | do. | 73 | 70 | 75 | 74 | 62 |
| | 1-10 | A-10 | do. | 69 | 68 | 71 | 69 | 65 |
| | 1-11 | A-11 | do. | 75 | 73 | 76 | 75 | 68 |
| | 1-12 | A-12 | do. | 76 | 74 | 77 | 74 | 61 |
| | 1-13 | A-13 | do. | 78 | 75 | 79 | 77 | 60 |
| | 1-14 | A-14 | do. | 80 | 76 | 81 | 78 | 62 |
| | 1-15 | A-15 | do. | 75 | 73 | 78 | 77 | 62 |
| | 1-16 | A-16 | do. | 78 | 77 | 79 | 77 | 63 |
| | 1-17 | A-17 | do. | 79 | 78 | 80 | 79 | 63 |
| | 1-18 | A-18 | do. | 72 | 70 | 76 | 73 | 72 |
| | 1-19 | A-19 | do. | 70 | 69 | 69 | 67 | 65 |

Table 5 (continued)

| No. | Sample No. | Appearance | Glossiness | | | | Contact angle of water droplet (°) |
|-----|-----------|------------|------------|-----|------------|-----|------------------------------------|
| | | | White plate | | Black plate | | |
| | | | before staining | after staining | before staining | after staining | |
| Ex. 1-20 | S-1 | transparent film | 68 | 66 | 66 | 64 | 63 |
| 1-21 | S-2 | do. | 73 | 71 | 74 | 74 | 67 |
| 1-22 | S-3 | do. | 72 | 70 | 73 | 71 | 69 |
| C.Ex. 1-1 | conventional one | do. | 57 | 51 | 62 | 48 | 85 |
| 1-2 | blank | — | 40 | 40 | 42 | 42 | 45 |

**POOR QUALITY**

(3) Practical test

Four white-coated automobiles (mfd. by Nissan Motor Co., Ltd.) were prepared. Among these automobiles, three ones were coated with the samples A-1, A-3, A-6, A-7 and A-12 to 17, which were prepared in the above paragraph (1), and a conventional wax respectively in the same manner as the one described in (2) and subjected to a traveling test for 88 days during which 25 days were rainy.

The glossiness of the automobiles were measured with the same device as the one used in the above paragraph (2) before and after the traveling test as well as after wiping stains thereon with cloth.

Table 6 shows the results.

Table 6

| No. | Sample No. | Before traveling | After traveling | After removing stains |
|---|---|---|---|---|
| Ex. 2-1 | A-1 | 81 | 76 | 80 |
| 2-2 | A-3 | 80 | 75 | 79 |
| 2-3 | A-6 | 82 | 74 | 81 |
| 2-4 | A-7 | 80 | 77 | 80 |
| 2-5 | A-12 | 82 | 77 | 80 |
| 2-6 | A-13 | 81 | 76 | 79 |
| 2-7 | A-14 | 83 | 77 | 81 |
| 2-8 | A-15 | 82 | 77 | 81 |
| 2-9 | A-16 | 83 | 78 | 82 |
| 2-10 | A-17 | 82 | 78 | 80 |
| C.Ex. 2-1 | conventional one | 72 | 58 | 62 |
| 2-2 | blank | 64 | 59 | 62 |

**POOR QUALITY**

Industrial Applicability

The above examples have proved that a coated surface treated with the treating agent for a coated surface of the present invention has a higher glossiness than that of one treated with a conventional wax. Furthermore, after a staining test, the former can be readily cleaned by simply wiping off stains.

It has been further proved that a coated surface treated with a treating agent for a coated surface comprising an aliphatic amine (cf. Example 1-4 in Table 3) shows a small contact angle compared with those comprising no aliphatic amine, which suggests that the former exerts an effect of inhibiting the aggregation of stains.

In addition, the practical tests have proved that a coated surface treated with the treating agent for a coated surface of the present invention is hardly stained compared with those treated with a conventional wax or the blank case. Furthermore the stains on the former can be readily removed by simply wiping off.

Thus the present invention, which provides a treating agent for a coated surface having remarkable effects of improving the glossiness of a coated surface and protecting thereof from stains, is highly useful in the art.

WHAT IS CLAIMED IS:

1. A treating agent for a coated surface which comprises at least one material selected from among a metal alkoxide of the following general formula (I):

$$M(OR)_n \qquad (I)$$

wherein M represents at least one metal atom selected from among those belonging to the groups IIIb, IV and Va in the periodic table;

R represents at least one straight-chain or branched and saturated or unsaturated aliphatic hydrocarbon group having 1 to 22 carbon atoms; and

n is a number corresponding to the valence of said metal atom;

homopolymers thereof having an average degree of condensation of 2 to 10 and copolymers thereof having an average degree of condensation of 2 to 10.

2. A treating agent for a coated surface as set forth in Claim 1, wherein M in the general formula (I) represents at least one metal atom selected from among Al, Ga, In, Si, Ti, Zr, Ta and Nb.

3. A treating agent for a coated surface as set forth in Claim 1, which comprises at least two materials selected from among $Zr(OR)_4$, $Ti(OR)_4$ and $Si(OR)_4$ and/or at least one material selected from among homopolymers and copolymers thereof.

**POOR QUALITY**

4. A treating agent for a coated surface as set forth in Claim 3, wherein a mixture of an alcohol solvent having 1 to 20 carbon atoms and silicone oil or a hydrocarbon solvent is used as a solvent.

5. A treating agent for a coated surface as set forth in Claim 1, which comprises tetraalkoxide(s) of Ti and/or Zr and/or polymer(s) thereof having an average degree of condensation of 2 to 10 wherein 10 to 100 % by number of the substituent OR is an $OR_1$ group (wherein $R_1$ represents a straight-chain or branched and saturated or unsaturated aliphatic hydrocarbon group having 4 to 22 carbon atoms) and 90 to 0 % by number of the same is an $OR_2$ group (wherein $R_2$ represents a straight-chain or branched and saturated hydrocarbon group having one to four carbon atoms).

6. A treating agent for a coated surface as set forth in Claim 5 wherein said tetraalkoxide(s) of Ti and/or Zr and/or polymer(s) thereof are tetraalkoxytitanium(s) and/or polymer(s) thereof, which further comprises aliphatic amine(s).

7. A treating agent for a coated surface as set forth in Claim 1, which comprises tetraalkoxysilane(s) wherein the R group in the substituent OR represents a straight-chain or branched alkyl group having one to ten carbon atoms and/or polymer(s) thereof having an average degree of condensation of 2 to 10.

# INTERNATIONAL SEARCH REPORT

International Application No · PCT/JP87/00768

## I. CLASSIFICATION OF SUBJECT MATTER (if several classification symbols apply, indicate all) [3]

According to International Patent Classification (IPC) or to both National Classification and IPC

Int.Cl⁴ C09G1/14, C09D5/00

## II. FIELDS SEARCHED

| Minimum Documentation Searched [4] | |
|---|---|
| Classification System | Classification Symbols |
| IPC | C09G1/00-1/18, C09D5/00 |

| Documentation Searched other than Minimum Documentation to the Extent that such Documents are Included in the Fields Searched [5] |
|---|
| |

## III. DOCUMENTS CONSIDERED TO BE RELEVANT [14]

| Category [*] | Citation of Document, [16] with indication, where appropriate, of the relevant passages [17] | Relevant to Claim No. [18] |
|---|---|---|
| X | JP, A, 50-1127 (Ishihara Yakuhin Kabushiki Kaisha) 8 January 1975 (08. 01. 75) & FR, B, 2228098 | 1-7 |

* Special categories of cited documents: [16]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search [2] | Date of Mailing of this International Search Report [2] |
|---|---|
| January 5, 1988 (05.01.88) | January 18, 1988 (18.01.88) |
| International Searching Authority [1] | Signature of Authorized Officer [20] |
| Japanese Patent Office | |